# EUROPEAN PATENT SPECIFICATION

(11) **EP 1 937 072 B1**
(45) Date of publication and mention of the grant of the patent: **14.10.2009**
(21) Application number: 06778193.0
(22) Date of filing: 08.08.2006
(51) Int. Cl.: A01N 47/34, A01N 43/40, A01P 7/00, A01P 5/00

(54) **PESTICIDAL MIXTURES COMPRISING A PHENYLSEMICARBAZONE**
PESTIZIDE MISCHUNGEN, DIE EIN PHENYLSEMICARBAZON ENTHALTEN
MELANGES PESTICIDES COMPRENANT UN PHENYLSEMICARBAZONE

(30) Priority: 11.08.2005 US 707312 P
(43) Date of publication of application: 02.07.2008
(73) Proprietor: BASF SE, 67056 Ludwigshafen (DE)
(72) Inventor: FINCH, Charles, W., Garner, North Carolina 27529 (US)
(74) Representative: Isenbruck, Günter
(86) International application number: PCT/EP2006/065134
(87) International publication number: WO 2007/017501

(56) References cited:
- WO-A-00/54591
- WO-A-98/00008
- WO-A-20/05002334
- US-B1- 6 566 308

## Description

The invention relates to emulsifiable concentrates (ECs) comprising insecticidal phenylsemicarbazones, a process for the production thereof, and the use of such ECs for controlling insect pests.

EP-A 0 462 456 discloses phenylcarbazones having a wide insecticidal spectrum. However, the known formulations of these compounds do not always show a completely satisfactory performance, in particular under field conditions.

WO 00/54591 A describes synergistic mixtures of neuronal sodium channel antagonists, like the phenylsemicarbazone metaflumizone with insecticides of several classes, e.g. cypermethrin, amitraz, fipronil, acetamiprid, spinosad, thiodicarb, and hydramethylnon. The active ingredients may be formulated separately i.a. as emulsifiable concentrates. Detailed proposals are not made.

US-B1- 6 566 308 discloses emulsifiable concentrates of water-insoluble pesticides comprising an organic solvent, e.g. a hydrocarbon and at least one water-miscible polar aprotic solvent, e.g. gamma-butyrolactone and an emulsifier system.

WO 98/00008 A discloses pesticidal emulsifiable concentrates comprising a specific surfactant system and a solvent which may be a water-immiscible solvent, e.g. hydrocarbon, or a water-miscible solvent, e.g. gamma-butyrolactone, or a combination of both.

WO 2005/002334 A discloses emulsifiable pesticide concentrates comprising as a solvent gamma-butyrolactone and a combination of surfactants acting as emulsifiers, penetration enhancers, stabilisers and crystallisation inhibitors.

It is, therefore, an object of the invention to provide a formulation of the above mentioned compounds which is stable in storage and application and which has a high biological activity.

It has now been found that this object can be achieved by using an EC formulation comprising a specific solvent system.

Accordingly, in one aspect of the invention there is provided an emulsifiable concentrate (EC) formulation, comprising
a) a phenylsemicarbazone compound of the formula (I), 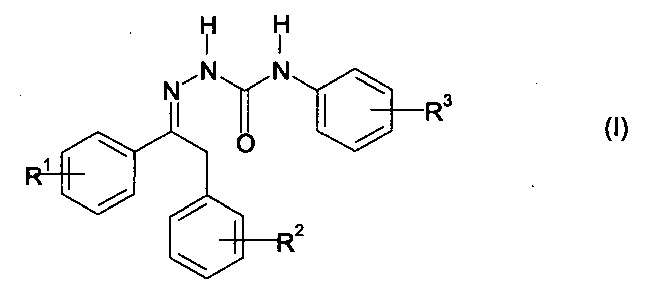 where R¹ and R² are, independently of one another, hydrogen, cyano, halogen, C₁-C₄-alkyl, C₁-C₄-alkoxy, C₁-C₄-haloalkyl or C₁-C₄-haloalkoxy and R³ is C₁-C₄-alkoxy, C₁-C₄-haloalkyl or C₁-C₄-haloalkoxy,
   or an agriculturally acceptable salt thereof;
b) a solvent system, comprising
   b1) γ-butyrolactone,
   b2) one or more aliphatic and/or aromatic ketone, and
   b3) optionally one or more aromatic hydrocarbon;
c) one or more emulsifier;
d) optionally, further formulation additives.

The EC formulation according to the invention shows excellent storage stability and biological activity.

The insecticidal semicarbazones of formula (I) are known from EP-A 0 462 456 and can be obtained by methods described therein.

Preferred compounds of formula (I) are those, where
R¹ is C₁-C₄-haloalkyl, more preferred C₁-C₄ fluoroalkyl, in particular CF₃;
R² is CN; and
R³ is C₁-C₄-haloalkoxy, more preferred C₁-C₄-fluoroalkoxy, in particular OCF₃.
"Halo" means F, Cl, Br and I.

Particularly preferred is the compound of formula (I), where R¹ is 3-CF₃, R² is 4-CN and R³ is 4-OCF₃, (Ia), 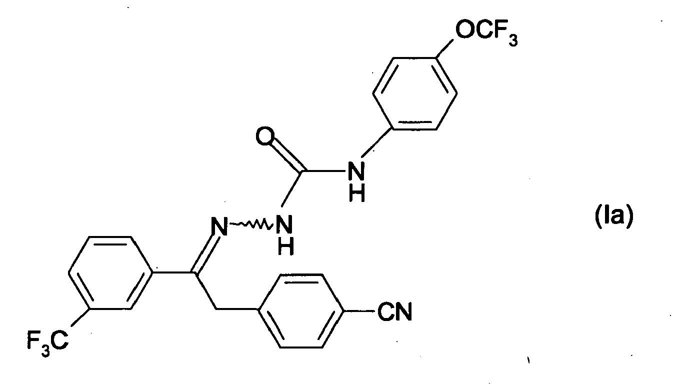 which has the common name metaflumizone.

The EC formulation according to the invention generally comprises 0.1 to 30% by weight, preferably 8 to 18% by weight, in particular 10 to 15% by weight, of the compound of formula (I).

The EC according to the invention may comprise further active ingredients used in crop protection, such as other insecticidally, fungicidally or herbicidally active or growth regulating active ingredients.

Insecticidally active ingredients which are preferred as further active ingredients include flonicamid, α-cypermethrin, acetamiprid and pyridalyl. These compounds are commercially available and are described, e.g., in The Pesticide Manual, 13th edition, British Crop Protection Council, Farnham 2003.

Additional active ingredients - if present - are generally employed in an amount of 0.1 to 50% by weight of the formulation.

The EC formulation according to the inventions generally comprises 6 to 97% by weight, preferably 10 to 90% by weight, in particular 25 to 80% by weight, of the solvent system (b).

γ-Butyrolactone, component (b1) of the solvent system is a commercially available solvent which can be obtained, e.g., from BASF, Germany.

γ-Butyrolactone is generally contained in an amount of 2 to 90% by weight, preferably 10 to 75% by weight, in particular 20 to 40% by weight of the formulation.

Suitable ketones as component (b2) of the solvent system include C₁ to C₂₀ aliphatic, cycloaliphatic and aromatic ketones.

Preferred are C₅ to C₁₈ alkanones, in particular 2-heptanone, mesityl oxide, cyclohexanone, isophorone, frenchone and acetophenone.

In a preferred embodiment component (b2) comprises two ketones, preferably acetophenone and an C₅-C₁₈ alkanone, in particular acetophenone and 2-heptanone.

Ketone component (b2) generally amounts to from 4 to 92% by weight, preferably 15 to 80% by weight of the formulation.

In the preferred embodiment acetophenone generally amounts to from 2 to 70% by weight, preferably 5 to 40% by weight, in particular 20 to 30% by weight of the formulation.

The aliphatic ketone, preferably 2-heptanone, generally amounts to from 2 to 90% by weight, preferably 10 to 40% by weight, in particular 10 to 30% by weight of the formulation.

All listed ketones are commercially available products.

Optionally, the solvent system comprises aromatic hydrocarbons as component (b3). Preferably, mixtures of alkylaromatics, in particular alkylbenzenes and alkylnaphthalenes, whose alkyl groups have 1 to 20 carbon atoms, are employed. Such mixtures are commercially available, e.g. as the Solvesso^{®}, e.g. Solvesso 200 (Exxon Mobil, USA), Aromatic, e.g. Aromatic 200 (Exxon Mobil), or Shellsol^{®} products (Deutsche Shell Chemie GmbH, Germany). Particularly preferred as component (b3) are Solvesso 200 and Aromatic 200.

The aromatic hydrocarbon component (b3) generally amounts to 0 to 30% by weight, preferably 0 to 10% by weight, in particular 1 to 5% by weight of the formulation.

The EC formulation of the present invention also contains at least one emulsifier. The emulsifier serves to reduce surface tension between the continuous and the disperse phase, thereby stabilizing the droplets of the disperse phase. The emulsifier also assists in the solubilisation of the compound of formula (I). Suitable emulsifiers are well known in the art, e.g. from McCutcheon's Detergents and Emulsifiers, Int. Ed., Ridge-wood, New York. Suitable emulsifiers include non-ionic, anionic, cationic and zwitterionic emulsifiers and mixtures thereof. The emulsifiers may be polymeric emulsifiers or non-polymeric emulsifiers. Non-polymeric emulsifiers, in contrast to polymeric emulsifiers, will generally have a molecular weight of below 2000 (number average), in particular from 150 to 2000, preferably from 200 to 1500.

The emulsifiers contained in the EC according to the invention can be nonionic or ionic, or a combination of both. It is preferred to use at least two, preferably three to five emulsifiers, preferably with different HLB values to achieve a good physicochemical behaviour of the EC at different temperatures.

The HLB (Hydrophile-Lipophile-Balance) is an empirical scale defined by W.C. Griffin (J. Soc. Cosmetic Chemists, 1, 311 (1949)) which expresses the amphiphilic nature of emulsifying agents (particularly nonionic emulsifiers). The least hydrophilic emulsifiers are assigned the lowest HLB values.
Suitable nonionic emulsifiers are, for example, alkoxylated fats or oils of animal or vegetable origin such as maize oil ethoxylates, castor oil ethoxylates, tallow fat ethoxylates, glycerol esters such as glycerol monostearate, fatty alcohol alkoxylates and oxo-alcohol alkoxylates, fatty acid alkoxylates such as oleic acid ethoxylate, alkylphenyl alkoxylates such as isononyl-, isooctyl-, tributyl- and tristearylphenyl ethoxylates, fatty amine alkoxylates, fatty acid amide alkoxylates, sugar emulsifiers such as sorbitan fatty acid esters (sorbitan monooleate, sorbitan tristearate), polyoxyethylene sorbitan fatty acid esters, alkylpolyglycosides, N-alkylgluconamides, alkylmethyl sulfoxides, alkyldimethylphosphine oxides such as tetradecyldimethylphosphine oxide, ethylene oxide/propylene oxide copolymers and mixtures of such nonionic emulsifiers.

Non-ionic emulsifiers include in particular
- polyoxy-C₂-C₃-alkylene C₈-C₂₂-alkyl ethers, in particular polyethoxylates and polyethoxylates-co-propoxylates of linear or branched C₈-C₂₂-alkanols, more preferably polyethoxylated fatty alcohols and polyethoxylated oxoalcohols, such as polyethoxylated lauryl alcohol, polyethoxylated isotridecanol, polyethoxylated cetyl alcohol, polyethoxylated stearyl alcohol, and esters thereof, such as acetates;
- polyoxy-C₂-C₃-alkylene aryl ethers and polyoxy-C₂-C₃-alkylene C₁-C₁₆-alkylaryl ethers, such as polyoxy-C₂-C₃-alkylene C₈-C₂₂-alkylbenzene ethers, in particular polyethoxylates of C₁-C₁₆-alkylphenoles, such as polyethoxylates of nonylphenol, decylphenol, isodecylphenol, dodecylphenol or isotridecylphenol,
- polyoxy-C₂-C₃-alkylene mono-, di- or tristyryl phenyl ethers, in particular polyethoxylates of mono-, di- und tristyrylphenoles; and the formaldehyde condensates thereof and the esters thereof, e.g. the acetates;
- C₆-C₂₂-alkylglucosides and C₆-C₂₂-alkyl polyglucosides;
- polyethoxylates of C₆-C₂₂-alkylglucosides and polyethoxylates of C₆-C₂₂-alkyl polyglucosides;
- polyethoxylates of fatty amines;
- polyethoxylates of fatty acids and polyethoxylates of hydroxyl fatty acids;
- partial esters of polyols with C₆-C₂₂-alkanoic acids, in particular mono- and diesters of glycerine and mono-, di- and triesters of sorbitan, such as glycerine monostearate, sorbitanmonooleat, sorbitantristearat;
- polyethoxylates of partial esters of polyols with C₆-C₂₂-alkanoic acids, in particular polyethoxylates of mono- and diesters of glycerine and polyethoxylates of mono-, di- and triesters of sorbitan, such as polyethoxylates of glycerine monostearate, polyethoxylates of sorbitanmonooleat, polyethoxylates of sorbitanmonostearat and polyethoxylates of sorbitantristearat;
- polyethoxylates of vegetable oils or animal fats such as corn oil ethoxylate, castor oil ethoxylate, tallow oil ethoxylate;
- acetylene glycols such as 2,4,7,9-tetramethyl-4,7-bis(hydroxy)-5-decyne;
- polyoxyethylene-polyoxypropylene-blockcopolymers; and
- polyethoxylates of fatty amines, fatty amides or of fatty acid diethanolamides.

The term polyoxy-C₂-C₃-alkylene ether refers to polyether radicals derived from ethyleneoxide or propyleneoxide. The term polyethoxylate refers to a polyether radical derived from ethyleneoxide. Likewise, the term polyoxyethylene-co-polyoxypropylene refers to a polyether radical derived from a mixture of ethyleneoxide and propylenoxide. The number of repeating units in the polyether radicals will generally vary from 4 to 100, in particular from 5 to 50.

Preferred nonionic emulsifiers are, for example, sorbitan fatty acid esters, in particular partial esters of sorbitol and its anhydrides, e.g. sorbitan monooleate, polyoxyethylene sorbitan fatty acid esters, such as polyethoxylated (preferably with approximately 20 moles of ethylene oxide) sorbitan monolaurate and sorbitan monooleate, castor oil ethoxylates, preferably with approximately 40 moles of ethylene oxide), and ethylene oxide/propylene oxide copolymers, such as alkyl ethylene oxide/propylene oxide copolymers, preferably with a molecular weight in the range of 2000 to 5000.

Ionic emulsifiers can be anionic emulsifiers or cationic emulsifiers or mixtures of anionic and cationic emulsifiers.

Examples of anionic emulsifiers are phosphate esters and sulfate esters of poly (preferably 2 to 30) ethoxylated (preferably C₆ to C₂₂) fatty alcohols such as ethoxylated (2EO (EO means an ethylene oxyde unit) oleyl alcohol phosphate ester (e.g. Empiphos^{®} O3D, Albright & Wilson, UK), ethoxylated oleyl alcohol phosphate esters (e.g. Crodafos^{®} N serie, Croda Oleochemicals, UK), ethoxylated (2-10 EO) ceto/stearyl alcohol phosphate esters (e.g. Crodafos^{®} CS serie, Croda Oleochemicals, UK), ethoxylated (4-6 EO) tridecyl alcohol phosphate esters (e.g. Emphos^{®} PS serie, CK Witco, USA), ethoxylated fatty alcohol phosphate esters (e.g. Crafol^{®} AP serie, Henkel Iberica, Spain), ethoxylated (3-6 EO) fatty alcohol phosphate esters (e.g. Rhodafac^{®} serie, Rhodia Chimie, France), free acids of complex organic phosphate esters (e.g. Beycostat^{®} serie, Ceca S.A., France), phosphate esters of polyethoxylated (8 to 25 EO) arylphenols (such as polyethoxylated di- and tristyrylphenols) (e.g. Soprophor 3D33, Rhodia Chimie, France), sulfate esters of polyethoxylated arylphenols (such as polyethoxylated di- and tristyrylphenols) (e.g. Soprophor DSS/7, Soprophor 4D384, Rhodia Chimie, France).

Anionic surfactants include in particular the sodium, potassium, calcium or ammonium salts of
- C₆-C₂₂-alkylsulfonates such as lauryl sulfonate, isotridecylsulfonate;
- C₆-C₂₂-alkylsulfates such as lauryl sulfate, isotridecylsulfate, cetylsulfate and stearylsulfate;
- aryl- and sulfonates, in particular C₁-C₁₆-alkylbenzene sulfonates, such as cumylsulfonate, octylbenzene sulfonate, nonylbenzene sulfonate, and dodecylbenzene sulfonate, naphthylsulfonate, mono- and di-C₁-C₁₆-alkylnaphthyl sulfonates such as dibutylnaphtylsulfonate;
- mono- and di-C₁-C₁₆-alkyldiphenylether (di)sulfonates such as dodecyldiphenylether disulfonate;
- sulfates and sulfonates of fatty acids and fatty acid esters;
- polyoxy-C₂-C₃-alkylene C₈-C₂₂-alkyl ether sulfates, in particular sulfates of ethoxylated C₈-C₂₂ alkanols such as sulfates of ethoxylated lauryl alcohol;
- polyoxy-C₂-C₃-alkylene C₁-C₁₆-alkylbenzene ether sulfates, in particular sulfates of ethoxylated C₁-C₁₆-alkylphenols;
- di C₄-C₁₈ alkylesters of sulfosuccinic acid (=C₄-C₁₈-dialkyl sulfosuccinates) such as dioctylsulfosuccinate;
- condensates of naphthalinesulfonic acid, C₁-C₁₆-alkyl naphthalinesulfonic acid or phenolsulfonic acid with formaldehyde (= (C₁-C₁₆-alkyl) naphthalene sulfonateformaldehyde condensates and phenolsulfonate formaldehyde condensates);
- polyoxy-C₂-C₃-alkylene mono- di- or tristyryl phenyl ether sulfates, in particular polyethoxylates of mono-, di- or tristyrylphenol;
- mono- and di-C₈-C₂₂-alkyl sulfates;
- polyoxy-C₂-C₃-alkylene C₈-C₂₂-alkyl ether phosphates;
- polyoxy-C₂-C₃-alkylene C₁-C₁₆-alkylbenzene ether phosphates;
- polyoxy-C₂-C₃-alkylene mono- di- or tristyryl phenyl etherphosphates;
- polyoxyethylene polycarboxylates, in particular homo- and copolymers of monoethylenically unsaturated mono- or dicarboxylic acids having from 3 to 8 carbon atoms, the copolmyers also having polyethylene oxide side chains;
- salts of fatty acids such as stearates; and
- polyphosphates such as hexametaphosphates and triphosphates (= tripolyphosphate).

Examples of cationic emulsifiers include alkyltrimethylammonium halides or alkyltrimethylammonium alkyl sulfates, alkylpyridinium halides or dialkyldimethylammonium halides and dialkyldimethylammonium alkyl sulfates.

Of the ionic emulsifiers anionic emulsifiers are preferred.

In a preferred embodiment of the invention, the emulsifier component comprises at least one emulsifier from the group of the sorbitan fatty monoesters, in particular sorbitan monooleate, and one or more, preferably two, emulsifiers from the group of the polyoxyethylene sorbitan fatty esters, in particular sorbitan monooleate and sorbitan monolaurate, each ethoxylated with approximately 20 moles ethylene oxide.

In a particularly preferred embodiment of the invention, the emulsifier component comprises an emulsifier from the group of the sorbitan fatty monoesters, one or more emulsifiers, preferably two, from the group of the polyethoxylated sorbitan fatty esters, and one or more emulsifiers from the group of the castor oil ethoxylates and ethylene oxide/propylene oxide copolymers.

The referenced nonionic emulsifiers are all commercially available. For example, sorbitan fatty acids are available as the S-MAZ^{®} (BASF, Germany) or the Span^{®} (UNIQEMA, US) series, polyoxyethylene sorbitan fatty esters as the T-MAZ^{®} (BASF, Germany) or the Tween^{®} (UNIQEMA, US) series, castor oil ethoxylates as Trylox 5909 (Cognis, Germany), and ethylene oxide/propylene oxide copolymers as the Tergitol series, such as Tergitol^{®} XD (Dow, USA) or the Surfonic^{®} LPP series.

The emulsifiers in the EC generally amount to from 2 to 20% by weight, preferably 5 to 15% by weight of the formulation

In the preferred and particularly preferred embodiments, the sorbitan fatty monoesters generally amount to from 0.1 to 15% by weight, preferably 1 to 5 % by weight of the formulation; the polyethoxylated sorbitan fatty esters generally amount to 1 to 5% by weight, preferably 1 to 5 % by weight of the formulation, the polyethoxylated castor oil generally amounts to 0 to 15% by weight, preferably 0 to 5% by weight of the formulation, and the ethylene oxide/propylene oxide copolymer generally amounts to 0 to 15% by weight, preferably 0 to 5% by weight of the formulation.

In addition, the EC according to the invention may comprise other conventional formulation additives, such as cosolvents, antifoams, antifreezes, preservatives, colorants, and wetting agents.

Suitable antifoams are, for example, aliphatic or aromatic monoalcohols having 4 to 14, preferably 6 to 10 carbon atoms, such as n-octanol or n-decanol, or silicone emulsifiers. The antifoams generally amount to from 0 to 10% by weight, preferably 0.01 to 1% by weight, of the formulation.

Typical antifreezes are, for example, ethylenglykol, propylenglykol, and glycerol.

Typical preservatives are, for example, vitamin E acetate, benzoic acid, sorbic acid, formaldehyde and traces of microbicidal compounds. Preservatives generally amount to from 0 to 10% by weight, preferably 0 to 1 % by weight of the formulation.

Typical colorants include oil soluble dyes, such as Vitasyn^{®} Patentblau (Clariant, Germany).

Typical wetting agents are, for example, polyethoxylated alkyl phenols (containing 1 to 30 moles ethylene oxide), polyethoxylated fatty alcohols (containing 1 to 30 moles ethylene oxide), tridecyl alcohol polyglykol ethers, and alkyl- or alkylphenyl-sulfonates. Wetting agents generally amount to from 0 to 50% by weight, preferably 0 to 10% by weight of the formulation.

The total content of further formulation additives generally amounts to from 0 to 52% by weight, preferably 0 to 10% by weight, more preferred 0 to 5% by weight of the formulation.

The EC formulation according to the invention is prepared in a manner known per se by mixing the components, if appropriate with stirring and/or heating. The products thus obtainable are normally homogeneous emulsion concentrates.

Containers which are suitable for the formulations are all containers conventionally used for crop protection products, mainly bottles, canisters, and bags made of chemical-resistant polymers. The use of water-soluble containers, mainly water-soluble film bags, in particular based on polyvinyl alcohol, is advantageous.

For application against insect pests the EC formulation is usually diluted with a suitable diluent, generally water, preferably with an at least 10 to 400, preferably 10 to 150 fold excess of diluent.

The spray liquids thus obtained can be used in a conventional manner for controlling insect pests on crop plants, their environment, seeds or propagation material, in home and garden applications, vector control and public hygiene.

It is understood that crop plants include genetically modified crop plants. It is further understood that "insecticidal" as used herein embraces arthropodicidal, such as insecticidal and acaricidal, nematicidal and molluscicidal activity. The same applies to the term "insect".

Examples of pests for crop plants include millipedes (Diplopoda) such as *Blaniulus* species Ants (Hymenoptera), such as *Atta capiguara, Atta cephalotes, Atta laevigata, Atta robusta, Atta sexdens, Atta texana, Monomorium pharaonis, Solenopsis geminata, Solenopsis invicta, Pogonomyrmex* species and *Pheidole megacephala,* Beetles *(Coleoptera),* such as *Agrilus sinuatus, Agriotes lineatus, Agriotes obscurus* and other *Agriotes* species, *Amphimallus solstitialis, Anisandrus dispar, Anthonomus grandis, Anthonomus pomorum, Aracanthus morei, Atomaria linearis, Blapstinus* species, *Blastophagus piniperda, Blitophaga undata, Bothynoderes punciventris, Bruchus rufimanus, Bruchus pisorum, Bruchus lentis, Byctiscus betulae, Cassida nebulosa, Cerotoma trifurcata, Ceuthorrhynchus assimilis, Ceuthorrhynchus napi, Chaetocnema tibialis, Conoderus vespertinus* and other *Conoderus* species, *Conorhynchus mendicus, Crioceris asparagi, Cylindrocopturus adspersus, Diabrotica (longicornis) barberi, Diabrotica semi-punctata, Diabrotica speciosa, Diabrotica undecimpunctata, Diabrotica virgifera* and other *Diabrotica* species, *Eleodes* species, *Epilachna varivestis, Epitrix hirtipennis, Eutinobothrus brasiliensis, Hylobius abietis, Hypera brunneipennis, Hypera postica, Ips typographus, Lema bilineata, Lema melanopus, Leptinotarsa decemlineata, Limonius californicus* and other *Limonius* species, *Lissorhoptrus oryzophilus, Listronotus bonariensis, Melanotus communis* and other *Melanotus* species, *Meligethes aeneus, Melolontha hippocastani, Melolontha melolontha, Oulema oryzae, Ortiorrhynchus sulcatus, Oryzophagus oryzae, Otiorrhynchus ovatus, Oulema oryzae, Phaedon cochleariae, Phyllotreta chrysocephala, Phyllophaga cuyabana* and other *Phyllophaga* species, *Phyllopertha horticola, Phyllotreta nemorum, Phyllotreta striolata,* and other *Phyllotreta* species, *Popillia japonica, Promecops carinicollis, Premnotrypes voraz, Psylliodes* species, *Sitona lineatus, Sitophilus granaria, Sternechus pinguis, Sternechus subsignatus,* and *Tanymechus palliatus* and other *Tanymechus* species,

Flies (Diptera) such as *Agromyza oryzea, Chrysomya bezziana, Chrysomya hominivorax, Chrysomya macellaria, Contarinia sorghicola, Cordylobia anthropophaga, Dacus cucurbitae, Dacus oleae, Dasineura brassicae, Delia antique, Delia coarctata, Delia platura, Delia radicum, Fannia canicularis, Gasterophilus intestinalis, Geomyza Tripunctata, Glossina morsitans, Haematobia irritans, Haplodiplosis equestris, Hypoderma lineata, Liriomyza sativae, Liriomyza trifolii, Lucilia caprina, Lucilia cuprina, Lucilia sericata, Lycoria pectoralis, Mayetiola destructor, Muscina stabulans, Oestrus ovis, Opomyza florum, Oscinella frit, Pegomya hysocyami, Phorbia antiqua, Phorbia brassicae, Phorbia coarctata, Progonya leyoscianii, Psila rosae, Rhagoletis cerasi, Rhagoletis pomonella, Tabanus bovinus, Tetanops myopaeformis, Tipula oleracea* and *Tipula paludosa,*

Heteropterans *(Heteroptera),* such as *Acrosternum hilare, Blissus leucopterus,* Cicadellidae such as *Empoasca fabae,* Chrysomelidae, *Cyrtopeltis notatus,* Delpahcidae, *Dysdercus cingulatus, Dysdercus intermedius, Eurygaster integriceps, Euschistus impictiventris, Leptoglossus phyllopus, Lygus lineolaris, Lygus pratensis, Nephotettix* species, *Nezara viridula,* Pentatomidae, *Piesma quadrata, Solubea insularis and Thyanta perditor,*
Aphids and other homopterans (Homoptera), e.g. *Acyrthosiphon onobrychis, Adelges laricis, Aphidula nasturtii, Aphis fabae, Aphis forbesi, Aphis glycines, Aphis gossypii, Aphis grossulariae, Aphis pomi, Aphis schneideri, Aphis spiraecola, Aphis sambuci, Acyrthosiphon pisum, Aulacorthum solani, Brachycaudus cardui, Brachycaudus helichrysi, Brachycaudus persicae, Brachycaudus prunicola, Brevicoryne brassicae, Capitophorus homi, Cerosipha gossypii, Chaetosiphon fragaefolii, Cryptomyzus ribis, Dreyfusia nordmannianae, Dreyfusia piceae, Dysaphis radicola, Dysaulacorthum pseudosolani, Dysaphis plantaginea, Dysaphis pyri, Empoasca fabae, Hyalopterus pruni, Hyperomyzus lactucae, Macrosiphum avenae, Macrosiphum euphorbiae, Macrosiphon rosae, Megoura viciae, Melanaphis pyrarius, Metopolophium dirhodum, Myzodes (Myzus) persicae, Myzus ascalonicus, Myzus cerasi, Myzus varians, Nasonovia ribis-nigri, Nilaparvata lugens, Pemphigus bursarius, Pemphigus populivenae,* and other *Pemphigus* species, *Perkinsiella saccharicida, Phorodon humuli,* Psyllidae such as *Psylla mali, Psylla piri* and other *Psylla* species, *Rhopalomyzus ascalonicus, Rhopalosiphum maidis, Rhopalosiphum padi, Rhopalosiphum insertum, Sappaphis mala, Sappaphis mali, Schizaphis graminum, Schizoneura lanuginosa, Sitobion avenae, Tri-aleurodes vaporariorum, Toxoptera aurantiiand,* and *Viteus vitifolii;* Lepidopterans (Lepidoptera), for example *Agrotis ypsilon, Agrotis segetum* and other *Agrotis* species, *Alabama argillacea, Anticarsia gemmatalis, Argyresthia conjugella, Autographa gamma, Bupalus piniarius, Cacoecia murinana, Capua reticulana, Cheimatobia brumata, Chilo suppresalis* and other *Chilo species, Choristoneura fumiferana, Choristoneura occidentalis, Cirphis unipuncta, Cnaphlocrocis medinalis, Cydia pomonella, Dendrolimus pini, Diaphania nitidalis, Diatraea grandiosella, Earias insulana, Elasmopalpus lignosellus, Eupoecilia ambiguella, Euxoa* species, *Evetria bouliana, Feltia subterranea, Galleria mellonella, Grapholitha funebrana, Grapholitha molesta, Heliothis armigera, Heliothis virescens, Heliothis* zea, *Hellula undalis, Hibemia defoliaria, Hyphantria cunea, Hyponomeuta malinellus, Keiferia lycopersicelia, Lambdina fiscellaria, Laphygma exigua, Lerodea eufala, Leucoptera coffeella, Leucoptera scitella, Lithocolletis blancardella, Lobesia botrana, Loxostege sticticalis, Lymantria dispar, Lymantria monacha, Lyonetia clerkella, Malacosoma neustria, Mamestra brassicae,* Momphidae, *Orgyia pseudotsugata, Ostrinia nubilalis, Panolis flammea, Pectinophora gossypiella, Peridroma saucia, Phalera bucephala, Phthorimaea operculella, Phyllocnistis citrella, Pieris brassicae, Plathypena scabra, Plutella xylostella, Pseudoplusia includens, Rhyacionia frustrana, Scrobipalpula absoluta, Sesamia nonagrioides* and other *Sesamia* species, *Sitotroga cerealella, Sparganothis pilleriana, Spodoptera frugiperda, Spodoptera littoralis, Spodoptera litura, Thaumatopoea pityocampa, Tortrix viridana, Trichoplusia ni* and *Zeiraphera canadensis,*
orthopterans *(Orthoptera),* such as Acrididae, *Acheta domestica, Blatta orientalis, Blattella germanica, Forficula auricularia, Gryllotalpa gryllotalpa, Locusta migratoria, Melanoplus bivittatus, Melanoplus femur-rubrum, Melanoplus mexicanus, Melanoplus sanguinipes, Melanoplus spretus, Nomadacris septemfasciata, Periplaneta americana, Schistocerca americana, Schistocerca peregrina, Stauronotus maroccanus* and *Tachycines asynamorus ;*
termites *(Isoptera),* such as *Calotermes flavicollis, Coptotermes* species, *Dalbulus maidis, Leucotermes flavipes, Macrotermes gilvus, Reticulitermes lucifugus* and *Termes natalensis;*
thrips (Thysanoptera) such as *Frankliniella fusca, Frankliniella occidentalis, Frankliniella tritici* and other *Frankliniella* species, *Scirtothrips citri, Thrips oryzae, Thrips palmi, Thrips simplex* and *Thrips tabaci,*
Arachnoidea, such as arachnids *(Acarina),* for example e.g. of the families *Argasidae, Ixodidae* and *Sarcoptidae,* such as *Amblyomma americanum, Amblyomma variegatum, Argas persicus, Boophilus annulatus, Boophilus decoloratus, Boophilus microplus, Dermacentor silvarum, Hyalomma truncatum, Ixodes ricinus, Ixodes rubicundus, Omithodorus moubata, Otobius megnini, Dermanyssus gallinae, Psoroptes ovis, Rhipicephalus appendiculatus, Rhipicephalus evertsi, Sarcoptes scabiei,* and Eriophyidae species such as *Aculus schlechtendali, Phyllocoptrata oleivora* and *Eriophyes sheldoni;* Tarsonemidae species such as *Phytonemus pallidus* and *Polyphagotarsonemus latus;* Tenuipalpidae species such as *Brevipalpus phoenicis;* Tetranychidae species such as *Tetranychus cinnabarinus, Tetranychus kanzawai, Tetranychus pacificus, Tetranychus telarius* and *Tetranychus urticae, Panonychus ulmi, Panonychus citri, and Oligonychus pratensis;*

Nematodes, especially plant parasitic nematodes such as root knot nematodes, *Meloidogyne hapla, Meloidogyne incognita, Meloidogyne javanica,* and other Meloidogyne species; cyst-forming nematodes, *Globodera rostochiensis* and other Globodera species; *Heterodera avenae, Heterodera glycines, Heterodera schachtii, Heterodera trifolii,* and other Heterodera species; Seed gall nematodes, Anguina species; Stem and foliar nematodes, Aphelenchoides species; Sting nematodes, *Belonolaimus longicaudatus* and other Belonolaimus species; Pine nematodes, *Bursaphelenchus xylophilus* and other Bursaphelenchus species; Ring nematodes, Criconema species, Criconemella species, Criconemoides species, Mesocriconema species; Stem and bulb nematodes, *Ditylenchus destructor, Ditylenchus dipsaci* and other Ditylenchus species; Awl nematodes, Dolichodorus species; Spiral nematodes, *Heliocotylenchus multicinctus* and other Helicotylenchus species; Sheath and sheathoid nematodes, Hemicycliophora species and Hemicriconemoides species; Hirshmanniella species; Lance nematodes, Hoploaimus species; false rootknot nematodes, Nacobbus species; Needle nematodes, *Longidorus elongatus* and other Longidorus species; Lesion nematodes, *Pratylenchus neglectus, Pratylenchus penetrans, Pratylenchus curvitatus, Pratylenchus goodeyi* and other Pratylenchus species; Burrowing nematodes, *Radopholus similis* and other Radopholus species; Reniform nematodes, *Rotylenchus robustus* and other Rotylenchus species; Scutellonema species; Stubby root nematodes, *Trichodorus primitivus* and other Trichodorus species, Paratrichodorus species; Stunt nematodes, *Tylenchorhynchus claytoni,* Tylenchorhynchus dubius and other Tylenchorhynchus species; Citrus nematodes, Tylenchulus species; Dagger nematodes, Xiphinema species; and other plant parasitic nematode species.

The EC according to the invention may also be used to combat rice pathogens such as rice water weevil *(Lissorhoptrus oryzaphilus),* rice stem borer *(Chilo suppresalis),* rice leaf roller, rice leaf beetle, rice leaf miner (Agromyca oryzae), leafhoppers *(Nephotettix* spp.;especially smaller brown leafhopper, green rice leafhopper), planthoppers *(Delphacidae;* especially white backed planthopper, brown rice planthopper), and stink-bugs.

Examples of non-crop pests of the classes Chilopoda and Diplopoda and of the orders Isoptera, Diptera, Blattaria (Blattodea), Dermaptera, Hemiptera, Hymenoptera, Orthoptera, Siphonaptera, Thysanura, Phthiraptera, Araneida, Parasitiformes and Acaridida, include for example:
centipedes (Chilopoda), e.g. *Scutigera coleoptrata,*
millipedes (Diplopoda), e.g. *Narceus spp.,*
spiders (Araneida), e.g. *Latrodectus mactans,* and *Loxosceles reclusa,*
scabies (Acaridida): e.g. *sarcoptes sp,*
ticks and parasitic mites (Parasitiformes): ticks (Ixodida), e.g. *Ixodes scapularis, Ixodes holocyclus, Ixodes pacificus, Rhiphicephalus sanguineus, Dermacentor andersoni, Dermacentor variabilis, Amblyomma americanum, Ambryomma maculatum, Ornithodorus hermsi, Ornithodorus turicata* and parasitic mites (Mesostigmata), e.g. *Omithonyssus bacoti* and *Dermanyssus gallinae,*
termites (Isoptera), e.g. *Calotermes flavicollis, Leucotermes flavipes, Heterotermes aureus, Reticulitermes flavipes, Reticulitermes virginicus, Reticulitermes lucifugus, Termes natalensis,* and *Coptotermes formosanus,*
cockroaches (Blattaria - Blattodea), e.g. Blattella germanica, Blattella asahinae, Periplaneta americana, Periplaneta japonica, Periplaneta brunnea, Periplaneta fuligginosa, Periplaneta australasiae, and Blatta orientalis,
flies, mosquitoes (Diptera), e.g. *Aedes aegypti, Aedes albopictus, Aedes vexans, Anastrepha ludens, Anopheles maculipennis, Anopheles crucians, Anopheles albimanus, Anopheles gambiae, Anopheles freebomi, Anopheles leucosphyrus, Anopheles minimus, Anopheles quadrimaculatus, Calliphora vicina, Chrysomya bezziana, Chrysomya hominivorax, Chrysomya macellaria, Chrysops discalis, Chrysops silacea, Chrysops atlanticus, Cochliomyia hominivorax, Cordylobia anthropophaga, Culicoides furens, Culex pipiens, Culex nigripalpus, Culex quinquefasciatus, Culex tarsalis, Culiseta inornata, Culiseta melanura, Dermatobia hominis, Fannia canicularis, Gasterophilus intestinalis, Glossina morsitans, Glossina palpalis, Glossina fuscipes, Glossina tachinoides, Haematobia irritans, Haplodiplosis equestris, Hippelates spp., Hypoderma lineata, Leptoconops torrens, Lucilia caprina, Lucilia cuprina, Lucilia sericata, Lycoria pectoralis, Mansonia spp., Musca domestica, Muscina stabulans, Oestrus ovis, Phlebotomus argentipes, Psorophora columbiae, Psorophora discolor, Prosimulium mixtum, Sarcophaga haemorrhoidalis, Sarcophaga sp., Simulium vittatum, Stomoxys calcitrans, Tabanus bovinus, Tabanus atratus, Tabanus lineola,* and *Tabanus similis,*
Earwigs (Dermaptera), e.g. *forficula auricularia,*
true bugs (Hemiptera), e.g. *Cimex lectularius, Cimex hemipterus, Reduvius senilis, Triatoma spp., Rhodnius prolixus, and Arilus critatus,*
ants, bees, wasps, sawflies (Hymenoptera), e.g. *Crematogaster spp., Hoplocampa minuta, Hoplocampa testudinea, Monomorium pharaonis, Solenopsis geminata, Solenopsis invicta, Solenopsis richteri, Solenopsis xyloni, Pogonomyrmex barbatus, Pogonomyrmex californicus, Dasymutilla occidentalis, Bombus* spp. *Vespula squamosa, Paravespula vulgaris, Paravespula pennsylvanica, Paravespula germanica, Dolichovespula maculata, Vespa crabro, Polistes rubiginosa, Camponotus floridanus,* and *Linepithema humile,*
crickets, grasshoppers, locusts (Orthoptera), e.g. *Acheta domestica, Gryllotalpa gryllotalpa, Locusta migratoria, Melanoplus bivittatus, Melanoplus femurrubrum, Melanoplus mexicanus, Melanoplus sanguinipes, Melanoplus spretus, Nomadacris septemfasciata, Schistocerca americana, Schistocerca gregaria, Dociostaurus maroccanus, Tachycines asynamorus, Oedaleus senegalensis, Zonozerus variegatus, Hieroglyphus daganensis, Kraussaria angulifera, Calliptamus italicus, Chortoicetes terminifera,* and *Locustana pardalina,*
fleas (Siphonaptera), e.g. *Ctenocephalides felis, Ctenocephalides canis, Xenopsylla cheopis, Pulex irritans, Tunga penetrans,* and *Nosopsyllus fasciatus,*
silverfish, firebrat (Thysanura), e.g. *Lepisma saccharina* and *Thermobia domestica,*
lice (Phthiraptera), e.g. Pediculus humanus capitis, Pediculus humanus corporis, Pthirus pubis, Haematopinus eurysternus, Haematopinus suis, Linognathus vituli, Bovicola bovis, Menopon gallinae, Menacanthus stramineus and *Solenopotes capillatus.*

Accordingly, in a further aspect of the invention there is provided the use of an EC formulation according to the invention for controlling insect pests.

In yet a further aspect of the invention there is provided a method for controlling insect pests, which comprises diluting an EC formulation according to the invention and applying it directly or indirectly to the insect pest.

Indirectly applying means that the diluted formulation is applied to places where the insect pest may lurk or to materials on which the pest feeds (such as seeds of crop plants).

It should be noted that preferred embodiments of the invention (specifically those comprising the preferred emulsifiers) are potentially less harmful to the eye and give the opportunity to achieve category II or III eye ratings.

The following examples illustrate the invention, but should not be construed to limit it.

### 1. Preparation Examples

Examples 1 to 5 were prepared by making a mixture of the solvents (butyrolactone, 2-heptanone, acetophenone and Aromatic 200) and adding the technical metaflumizone with heat and agitation. When the metaflumizone completely dissolved to form a clear solution, the emulsifiers were added and mixed until a clear EC had been prepared.

**Table 1: Preparation Examples**

| Preparation Example No. | Component | Concentration | Function of Ingredient |
|---|---|---|---|
| 1 | Metaflumizone | 12.35 | Active ingredient |
| | γ-Butyrolactone | 31.95 | solvent |
| | 2-heptanone | 17.70 | solvent |
| | Acetophenone | 25.00 | solvent |
| | aromatic hydrocarbon mixture (Aromatic 200) | 3.00 | solvent |
| | polyethylene oxide (20) sorbitan monolaurate (T-MAZ^{®} 20) | 4.00 | emulsifier |
| | alkyl ethylene oxide/propylene oxide copolymer (Surfonic^{®} LPP L4-29x) | 3.00 | emulsifier |
| | Sorbitan monooleate (S-MAZ^{®} 80) | 3.00 | emulsifier |
| 2 | Metaflumizone | 12.35 | Active ingredient |
| | γ-Butyrolactone | 28.95 | solvent |
| | 2-heptanone | 17.70 | solvent |
| | Acetophenone | 25.00 | solvent |
| | aromatic hydrocarbon mixture (Aromatic 200) | 3.00 | solvent |
| | polyethylene oxide (20) sorbitan monolaurate (T-MAZ^{®} 20) | 4.00 | emulsifier |
| | alkyl ethylene oxide/propylene oxide copolymer (Surfonic^{®} LPP L4-29x) | 3.00 | emulsifier |
| | Sorbitan monooleate (S-MAZ^{®} 80) | 3.00 | emulsifier |
| | Vitamin E (acetate) | 3.00 | preservative |
| 3 | Metaflumizone | 12:35 | Active ingredient |
| | y-Butyrolactone | 26.95 | solvent |
| | 2-heptanone | 17.70 | solvent |
| | acetophenone | 25.00 | solvent |
| | aromatic hydrocarbon mixture (Aromatic 200) | 3.00 | solvent |
| | polyethylene oxide (20) sorbitan monolaurate (T-MAT^{®} 20) | 2.00 | emulsifier |
| | sorbitan monooleate (S-MAZ^{®} 80) | 1.00 | emulsifier |
| | polyethoxylated (40) castor oil (Trylox 5909) | 7.00 | emulsifier |
| | polyethylene oxide (20) sorbitan monooleate (T-MAZ^{®} 80) | 5.00 | emulsifier |
| 4 | Metaflumizone | 12.35 | Active ingredient |
| | y-Butyrolactone | 31.95 | solvent |
| | 2-heptanone | 17.70 | solvent |
| | acetophenone | 25.00 | solvent |
| | aromatic hydrocarbon mixture (Aromatic 200) | 3.00 | solvent |
| | alkyl ethylene oxide/propylene oxide copolymer (Surfonic^{®} LPP L4-29x) | 2.00 | emulsifier |
| | polyethylene oxide (20) sorbitan monolaurate (T-MAZ^{®} 20) | 4.20 | emulsifier |
| | sorbitan monooleate (S-MAZ^{®} 80) | 1.80 | emulsifier |
| | polyethoxylated (40) castor oil (Trylox 5909) | 2.00 | emulsifier |
| 5 | metaflumizone | 12.35 | Active ingredient |
| | γ-Butyrolactone | 27.25 | solvent |
| | 2-heptanone | 17.70 | solvent |
| | acetophenone | 25.00 | solvent |
| | aromatic hydrocarbon mixture (Aromatic 200) | 3.00 | solvent |
| | alkyl ethylene oxide/propylene oxide copolymer (Surfonic^{®} LPP L4-29x) | 2.00 | emulsifier |
| | polyethylene oxide (20) sorbitan monolaurate (T-MAZ^{®} 20) | 4.20 | emulsifier |
| | sorbitan monooleate (S-MAZ^{®} 80) | 1.80 | emulsifier |
| | polyethoxylated (40) castor oil (Trylox 5909) | 2.00 | emulsifier |
| | polyethylene oxide (20) sorbitan monooleate (T-MAZ^{®} 80) | 4.70 | emulsifier |

### 2. Stability Test

The EC according to Preparation Example 3 was kept at 54°C for two weeks. Chemical recovery of the active ingredient was greater than 98%.

### 3. Biological Examples

### Biological Example 1

Performance of EC formulations according to the invention against the Colorado potato beetle (Leptinotarsa decemlineata) in potatoes

### Methodology

The trial was arranged in a randomized complete block design with three replications. Plots were 5m long and one row (1m) wide. Applications were conducted with a four-nozzle row crop boom delivering side and overhead coverage, at 3-bar pressure and 400 l/ha. Numbers of larvae (L1/2) (L3/4) were recorded per plot at 2, 5 and 14 DAT (day after treatment) and a defoliation assessment was made at 14 DAT. Colorado potato beetle pressure was high resulting in complete defoliation in the controls at 19 DAT. The results are shown in Table 2.

**Table 2: Performance against Colorado potato beetle**

| g Al/HA | | Mean # of L1/L2 per plot | | | Mean # ofL3/L4 per plot | | | % Defoliation |
|---|---|---|---|---|---|---|---|---|
| | G Al/HA | 2 DAT | 5 DAT | 14 DAT | 2 DAT | 5 DAT | 14 DAT | 14 DAT |
| Control | | 63a | 90a | 34a | 83a | 98a | 6.3ab | 83a |
| metaflumizone dissolved in acetone | 60 | .3b | 4b | .3a | .3b | 2b | 7ab | 18a |
| Prep. Ex. 2 | 30 | .3b | 8.3b | 1.7a | 0b | 5.7b | 1.3b | 28a |
| **-** " - | 45 | 0b | 6.3b | 3.3a | 0b | 4b | 5.7ab | 22a |
| - " - | 60 | 0b | 5.7b | 7.3a | 0b | 1.7b | 15.7ab | 15a |
| Prep. Ex. 3 | 30 | 0b | 14.3b | 1.7a | .7b | 2.3b | 0.3b | 25a |
| -"- | 45 | 0b | 15b | 4a | .7b | 5.7b | 1.7b | 35a |
| -"- | 60 | 0b | 6b | 1.7a | 0b | 2.3b | 1 b | 28a |
| Means followed by the same letter do not significantly differ (P=.05, DMRT) | | | | | | | | |
| % feeding damage assessments means transformed by arcsine square root percentage | | | | | | | | |
| Al = Active Ingredient | | DAT = Day after treatment | | | | | | |
| L1/L2 = instar 1/2 larvae | | L3/L4 = instar 3/4 larvae | | | | | | |

### Biological Example 2

Performance of EC formulations according to the invention against Southern armyworm (Spodoptera eridania), third instar

A stock solution of metaflumizone formulation is diluted into a container of water. Lima bean leaves are dipped into treatment solutions and allowed to air-dry. A single treated leaf is placed topside-up onto water-moistened filter paper in multiple plastic petri dishes. Seven larvae are placed onto each leaf and then each arena is sealed with petri dish covers. Each treatment replicated 4-fold (1 replicate = 1 petri dish arena). Following treatment application, infested plants are held in the laboratory under fluorescent lighting and constant 26°C. Larval mortality/morbidity (i.e., number dead/number tested) is assessed at 5 days post-treatment. The mortality levels based on number of live larve. From this data, the LC50 & LC90 values for each compound are estimated via Log Dose-Probit analysis.

The results are shown in Table 3.

**Table 3: Results against Southern armyworm**

| Formulation | LC₅₀ | LC₉₀ | Biological Enhancement |
|---|---|---|---|
| metaflumizone dispersed in water | 1.50 ppm | 7.70 ppm | 1x (standard control) |
| Prep. Ex. 2 | 0.30 ppm | 2.15 ppm | 5x |
| Prep. Ex. 3 | 0.33 ppm | 1.77 ppm | 5x |

## Claims

1. An emulsifiable concentrate (EC) formulation, comprising
a) a phenylsemicarbazone compound of the formula (I), 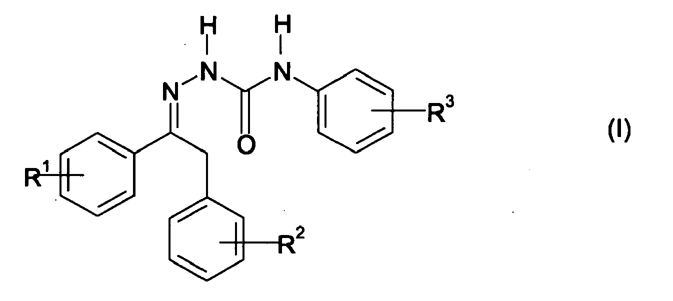 where R¹ and R² are, independently of one another, hydrogen, cyano, halogen, C₁-C₄-alkyl, C₁-C₄-alkoxy, C₁-C₄-haloalkyl or C₁-C₄-haloalkoxy and R³ is C₁-C₄-alkoxy, C₁-C₄-haloalkyl or C₁-C₄-haloalkoxy,
or an agriculturally acceptable salt thereof,
b) a solvent system, comprising
b1) γ-butyrolactone,
b2) one or more aliphatic and/or aromatic ketones, and
b3) optionally one or more aromatic hydrocarbons
c) one or more emulsifiers,
d) optionally, further formulation additives.

2. The EC formulation as claimed in claim 1, where the phenylsemicarbazone of the formula (I) is metaflumizone.

3. The EC formulation as claimed in claim 1 or 2, which comprises one or more further active ingredient used in crop protection.

4. The EC formulation as claimed in claim 3, where the further active ingredients are selected from the group consisting of flonicamid, α-cypermethrin, acetamiprid and pyridalyl.

5. The EC formulation as claimed in any one of claims 1 to 4 consisting essentially of
a) 0.1 to 30% by weight of the phenyl semicarbazone of formula (I),
b) 6 to 97% by weight of the solvent system, comprising
b1) y-butyrolactone,
b2) one or more aliphatic and/or aromatic ketones, and
b3) optionally one or more aromatic hydrocarbons;
c) 2 to 20% by weight of one or more emulsifiers, and
d) 0 to 52% of further formulation additives.

6. The EC formulation as claimed in any one of claims 1 to 5, where the solvent system comprises as ketone component (b2) an aromatic ketone and an aliphatic ketone.

7. The EC formulation as claimed in claim 6, where the aromatic ketone is acetophenone and the aliphatic ketone is 2-heptanone.

8. The EC formulation as claimed in any one of claims 1 to 7, where the solvent system comprises as aromatic hydrocarbon component (b3) a mixture of alkylaromatic compounds.

9. The EC formulation as claimed in any one of claims 1 to 8, where the emulsifier component (c) consists of one or more nonionic emulsifiers.

10. A process for preparing an EC formulation, comprising the steps of mixing components a, b, c and optionally d according to any one of claims 1 to 9 if appropriate with stirring and/or heating.

11. The use of an EC formulation according to any one of claims 1 to 9 for controlling insect pests.

12. A method for controlling insect pests, comprising the steps of diluting an EC formulation according to any one of claims 1 to 9 and applying it directly or indirectly to the insect pest.

## Patentansprüche

1. Emulsionskonzentrat (EC)-Formulierung, enthaltend
a) eine Phenylsemicarbazonverbindung der Formel (I) 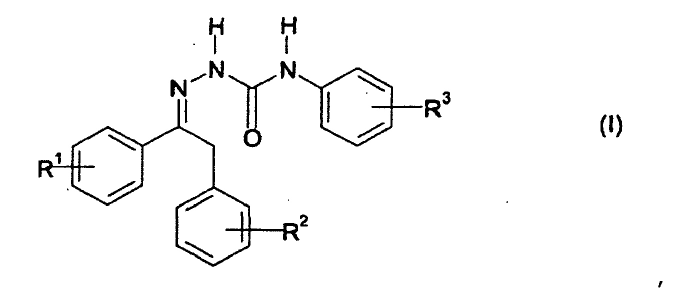 wobei R¹ und R² unabhängig voneinander für Wasserstoff, Cyano, Halogen, C₁-C₄-Alkyl, C₁-C₄-Alkoxy, C₁-C₄-Halogenalkyl oder C₁-C₄-Halogenalkoxy stehen und R³ für C₁-C₄-Alkoxy, C₁-C₄-Halogenalkyl oder C₁-C₄-Halogenalkoxy stehen,
oder ein landwirtschaftlich unbedenkliches Salz davon,
b) ein Lösungsmittelsystem, enthaltend
b1) γ-Butyrolacton
b2) ein oder mehrere aliphatische und/oder aromatische Ketone und
b3) gegebenenfalls ein oder mehrere aromatische Kohlenwasserstoffe,
c) ein oder mehrere Emulgatoren,
d) gegebenenfalls weitere Formulierungszusätze.

2. EC-Formulierung nach Anspruch 1, wobei es sich bei dem Phenylsemicarbazon der Formel (I) um Methaflumizon handelt.

3. EC-Formulierung nach Anspruch 1 oder 2, die ein oder mehrere weitere im Pflanzenschutz verwendete Wirkstoffe enthält.

4. EC-Formulierung nach Anspruch 3, wobei die weiteren Wirkstoffe aus der aus Flonicamid, α-Cypermethrin, Acetamiprid und Pyridalyl bestehenden Gruppe ausgewählt sind.

5. EC-Formulierung nach einem der Ansprüche 1 bis 4, im Wesentlichen bestehend aus
a) 0,1 bis 30 Gew.-% des Phenylsemicarbazons der Formel (I),
b) 6 bis 97 Gew.-% des Lösungsmittelsystems, enthaltend
b1) γ-Butyrolacton
b2) ein oder mehrere aliphatische und/oder aromatische Ketone und
b3) gegebenenfalls ein oder mehrere aromatische Kohlenwasserstoffe,
c) 2 bis 20 Gew.-% eines oder mehrerer Emulgatoren und
d) 0 bis 52% weiterer Formulierungszusätze.

6. EC-Formulierung nach einem der Ansprüche 1 bis 5, wobei das Lösungsmittelsystem als Ketonkomponente (b2) ein aromatisches Keton und ein aliphatisches Keton enthält.

7. EC-Formulierung nach Anspruch 6, wobei es sich bei dem aromatischen Keton um Acetophenon und bei dem aliphatischen Keton um 2-Heptanon handelt.

8. EC-Formulierung nach einem der Ansprüche 1 bis 7, wobei das Lösungsmittel als aromatische Kohlenwasserstoffkomponente (b3) eine Mischung alkylaromatischer Verbindungen enthält.

9. EC-Formulierung nach einem der Ansprüche 1 bis 8, wobei die Emulgatorkompente (c) aus einem oder mehreren nichtionischen Emulgatoren besteht.

10. Verfahren zur Herstellung einer EC-Formulierung, bei dem man die Komponenten a, b, c und gegebenenfalls d gemäß einem der Ansprüche 1 bis 9 mischt, gegebenenfalls unter Rühren und/oder Erhitzen.

11. Verwendung einer EC-Formulierung nach einem der Ansprüche 1 bis 9 zur Bekämpfung von Schadinsekten.

12. Verfahren zur Kontrolle von Schadinsekten, bei dem man eine EC-Verbindung nach einem der Ansprüche 1 bis 9 verdünnt und direkt oder indirekt auf die Schadinsekten aufbringt.

## Revendications

1. Formulation de concentré émulsifiable (EC), comprenant
a) un composé de phénylsemicarbazone de formule (I) 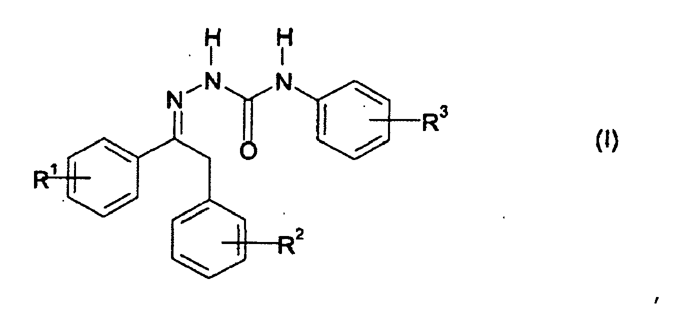 dans laquelle R¹ et R² sont, indépendamment l'un de l'autre, hydrogène, cyano, halogène, C₁-C₄-alkyle, C₁-C₄-alcoxy, C₁-C₄-halogénoalkyle ou C₁-C₄-halogénoalcoxy et R³ est C₁-C₄-alcoxy, C₁-C₄-halogénoalkyle ou C₁-C₄-halogénoalcoxy,
ou un sel acceptable en agriculture de celui-ci,
b) un système de solvant, comprenant
b1) γ-butyrolactone,
b2) une ou plusieurs cétones aliphatiques et/ou aromatiques, et
b3) éventuellement un ou plusieurs hydrocarbures aromatiques
c) un ou plusieurs émulsifiants,
d) éventuellement d'autres additifs de formulation.

2. Formulation d'EC selon la revendication 1, **caractérisée en ce que** la phénylsemicarbazone de formule (I) est la métaflumizone.

3. Formulation d'EC selon les revendications 1 ou 2, **caractérisée en ce qu'**elle comprend un ou plusieurs principes actifs supplémentaires utilisés dans la protection des cultures.

4. Formulation d'EC selon la revendication 3, **caractérisée en ce que** les principes actifs supplémentaires sont choisis dans le groupe constitué de flonicamid, d'α-cyperméthrine, d'acétamipride et de pyridalyl.

5. Formulation d'EC selon l'une quelconque des revendications 1 à 4, constituée essentiellement de
a) 0,1 à 30 % en poids de la phénylsemicarbazone de formule (I),
b) 6 à 97 % en poids du système de solvant, comprenant
b1) γ-butyrolactone,
b2) une ou plusieurs cétones aliphatiques et/ou aromatiques, et
b3) éventuellement un ou plusieurs hydrocarbures aromatiques;
c) 2 à 20 % en poids d'un ou plusieurs émulsifiants et
d) 0 à 52 % d'additifs de formulation supplémentaires.

6. Formulation d'EC selon l'une quelconque des revendications 1 à 5, **caractérisée en ce que** le système de solvant comprend à titre de cétone (b2) une cétone aromatique et une cétone aliphatique.

7. Formulation d'EC selon la revendication 6, **caractérisée en ce que** la cétone aromatique est l'acétophénone et la cétone aliphatique est la 2-heptanone.

8. Formulation d'EC selon l'une quelconque des revendications 1 à 7, **caractérisée en ce que** le système de solvant comprend à titre de composant hydrocarbure aromatique (b3) un mélange de composés alkylaromatiques.

9. Formulation d'EC selon l'une quelconque des revendications 1 à 8, **caractérisée en ce que** le composant émulsifiant (c) est constitué d'un ou plusieurs émulsifiants non ioniques.

10. Procédé de préparation d'une formulation d'EC, comprenant les étapes consistant à mélanger des composants a, b, c et éventuellement d selon l'une quelconque des revendications 1 à 9, le cas échéant sous agitation et/ou avec chauffage.

11. Utilisation d'une formulation d'EC selon l'une quelconque des revendications 1 à 9, pour lutter contre les insectes nuisibles.

12. Méthode de lutte contre les insectes nuisibles, comprenant les étapes consistant à diluer une formulation d'EC selon l'une quelconque des revendications 1 à 9 et à l'appliquer directement ou indirectement sur l'insecte nuisible.
